# EUROPÄISCHE PATENTSCHRIFT

(11) **EP 3 338 005 B1**
(45) Veröffentlichungstag und Bekanntmachung des Hinweises auf die Patenterteilung: **04.12.2019**
(21) Anmeldenummer: 16721801.5
(22) Anmeldetag: 10.05.2016
(51) Int. Cl.: F16F 9/43, F16F 9/04

(54) **LUFTFEDER UND IHRE VERWENDUNG**
PNEUMATIC SPRING AND THE USE THEREOF
RESSORT PNEUMATIQUE ET SON UTILISATION

(30) Priorität: 18.08.2015 DE 102015215735
(43) Veröffentlichungstag der Anmeldung: 27.06.2018
(73) Patentinhaber: ContiTech Luftfedersysteme GmbH, 30165 Hannover (DE)
(72) Erfinder: BRAUN, Patrik, 30627 Hannover (DE); MÖLLENBRUCK, Bernd, 30659 Hannover (DE)
(74) Vertreter: Kilsch, Armin Ralph
(86) Internationale Anmeldenummer: PCT/EP2016/060365
(87) Internationale Veröffentlichungsnummer: WO 2017/028970

(56) Entgegenhaltungen:
- EP-A1- 2 696 095
- US-A- 5 326 082
- US-A1- 2006 055 094

## Beschreibung

Die Erfindung betrifft eine Luftfeder mit einem Luftfederbalg aus elastomerem Material, der an den seinen Balgenden mit Hilfe von Anschlussteilen zwischen gefederter und ungefederter Masse bzw. zwischen gefederter Masse und einem umgebenden Rahmen eingespannt und über die Anschlussteile an den Befestigungsteilen der gefederten oder ungefederten Masse angelenkt ist, wobei die Anschlussteile und der Luftfederbalg den unter Innendruck stehenden und das Luftfedervolumen beinhaltenden Arbeitsraum umschließen und der Arbeitsraum mit mindestens einem in den Anschlussteilen vorgesehenen Luftanschluss in Verbindung steht.

Luftfedern dieser Art sind im Stand der Technik umfassend bekannt und werden insbesondere bei Fahrzeugen, hier bei Lastkraftwagen ebenso wie bei größeren Personenkraftwagen, bei verschiedenen Federungsaufgaben eingesetzt. Üblicherweise werden solche Luftfedern in Fahrwerksfederungen eingesetzt, aber auch zur Federung für von Fahrersitzen in Nutzfahrzeugen oder zur Federung von Kabinen/Fahrerkabinen gegenüber dem Fahrzeugrahmen.

Zur einfachen Montage werden solche Luftfedern insbesondere bei Fahrersitzen, Kabinenlagerungen und Achsanwendungen häufig mit einer Bajonettverriegelung am Luftfederdeckel ausgerüstet. Durch diese robuste und einfache Verriegelung wird eine Befestigungsverschraubung überflüssig.

Die Luftfedern sind an eine Luftversorgung angeschlossen, üblicherweise über Schläuche und/oder Luftleitungen. Die Luftversorgung erfolgt in aller Regel über einen im Fahrzeug befindlichen Druckspeicher, der mithilfe eines Kompressors befüllt wird und dann über eine Steuerung die Luftversorgung für die einzelnen Federungen bereitstellt. Oft ist die Luftfedersteuerung in die übrige Fahrzeugsteuerung mit eingebunden.

Zur sicheren und druckdichten Anbindung eines Luftversorgungsschlauches mit den einzelnen Luftfedern werden bei letzteren so genannte Luftanschlusselemente in Form von Einpresspatronen oder Stecknippel eingesetzt. Diese Elemente befinden sich üblicherweise im Luftfederkolben oder Luftfederdeckel, welche heute oft als Kunststoffspritzgussteil ausgeführt sind. Bei einigen Luftfedern sind auch mehr als ein Luftanschlusselement eingesetzt.

In den Fällen, in denen Luftversorgungschläuche/Luftleitungen nach dem Einbau der Luftfeder angeschlossen werden, steht für die Positionierung der Luftanschlüsse örtlich wenig Platz zur Verfügung, sei es neben der üblichen recht flach gestalteten Bajonettverriegelung, sei es bei Luftfanschlüssen im oder am Abrollkolben. Das führt dazu, dass sich die Montage, also das Einstecken des Luftschlauches in Deckel oder Kolben der Luftfeder sich häufig als sehr schwierig erweist, da der Zugang zu den Luftanschlusselementen durch weitere Bauteile im Fahrzeug erschwert wird. Wenn beispielsweise eine solche Luftfeder mit einem Bajonettverschluss an die entsprechende komplementäre Aufnahme im Fahrersitz angeschlossen wird und diese Aufnahme sich direkt unter der Sitzschale befindet, so ist es schlichtweg unmöglich, den Luftanschluss nachträglich im Bereich zwischen Luftfederdeckel und Sitzschale zu montieren. In den Fällen, in denen die Luftversorgungschläuche/Luftleitungen vor dem Einbau der Luftfeder angeschossen sind, ist der Einbau durch die bereits angeschlossenen Schläuche oft noch schwieriger, da letztere natürlich das Manipulieren des zusammengesetzten Bauteils erschweren. In beiden Fällen ist eine nachträgliche Wartung oder ein nachträglicher Austausch der Schläuche natürlich überaus aufwendig.

Das Dokument US 2006/055094 A1 wird als nächstliegender Stand der Technik betrachtet und es beschreibt eine Luftfeder entsprechend dem Oberbegriff des Anspruchs 1.

Für die Erfindung bestand also die Aufgabe, eine Luftfeder bereitzustellen, deren Konstruktion eine einfache Montage der Luftleitungen in auch schwierigen Einbausituationen erlaubt und die im Übrigen mit den im Stand der Technik vorhandenen eingeübten Methoden und vorhandenen Montageteilen auskommt.,

Gelöst wird diese Aufgabe durch die Merkmale des Hauptanspruchs. Weitere vorteilhafte Ausbildungen sind in den Unteransprüchen offenbart.

Dabei ist mindestens eines der Anschlussteile mit einer lösbaren Schnapp- oder Rastverbindung an das zugehörige Befestigungsteil angeschlossen ist und die Schnapp- oder Rastverbindung als solche beinhaltet mindestens einen Luftanschluss bzw. ein Luftanschlusselement, an den eine Zuleitung oder ein Schlauch für die Druckluftzufuhr angeschlossen ist. Die Integration von Luftanschlusselementen in der Schnapp- oder Rastverbindung ermöglicht es, dass Bauraum, der für die Verriegelung zur Verfügung steht, auch für die Luftzufuhr genutzt werden kann. Die Montage des Luftzufuhrschlauches kann dadurch nach Montage der Luftfeder in leichter zugänglichen Bereichen erfolgen.

Erfindungsgemäß ist die Schnapp- oder Rastverbindung zwischen Anschlussteil und Befestigungsteil als Bajonettverschluss ausgebildet, so dass die Montage-und Bewegungsabläufe im Grunde dieselben sind, die aus dem Stand der Technik in den entsprechenden Betrieben bekannt sind. Dabei werden die Teile in bekannter Weise einfach durch Ineinanderstecken und gegenseitiges Verdrehen verbunden und entsprechend wieder gelöst.

Eine vorteilhafte Ausbildung besteht darin, dass der Luftanschluss als Steckverbindung oder Steckkupplung ausgebildet ist oder als Teil einer Steckverbindung oder Steckkupplung, deren komplementärer Teil sich an der Zuleitung oder am Schlauch befindet. Insbesondere mit einer Ausführung, in der der Luftanschluss ein Luftanschlusselement aufweist, welches als Buchse oder Steckpatrone in der Schnapp- oder Rastverbindung bzw. im Bajonettverschluss angeordnet ist, vereinfacht man nicht nur die Montage im Fahrzeug und erleichtert die Wartung und Instandhaltung, es wir auch eine einfachere Herstellung ermöglicht, bei der lediglich die Buchse oder Steckpatrone z. B. als präzises und eng toleriertes Drehteil hergestellt wird und nicht der gesamte Luftfederdeckel bearbeitet werden muss.

Häufig werden zur Erhöhung des Schwingungskomforts an die Luftfeder auch Behälter mit einem Zusatzvolumen für das Federmedium Luft angeschlossen. Eine vorteilhafte Weiterbildung der Erfindung besteht dann darin, dass die Schnapp- oder Rastverbindung mehrere Luftanschlüsse aufweist, vorzugsweise einen Luftanschluss zur Befüllung und Entlüftung des Arbeitsraumes und einen Luftanschluss zur Verbindung des Arbeitsraumes mit einem Zusatzvolumen oder weiteren Federvolumina.

Für eine optimale Funktion ist es vorteilhaft, wenn diese Zusatzvolumenbehälter mit einem Schlauch größeren Durchmessers mit der Luftfeder verbunden werden. Diesen Anwendungen dient insbesondere eine weitere vorteilhafte Ausbildung, die darin besteht, dass die Schnapp- oder Rastverbindung mehrere unterschiedliche Luftanschlüsse bzw. Luftanschlusselemente aufweist, wobei die Luftanschlüsse bzw. Luftanschlusselemente unterschiedliche Dimensionen und/oder unterschiedliche Ausbildungen zur Verbindung mit Zuleitungen oder Schläuchen aufweisen. Damit können auf einfache Weise unterschiedliche Luftanschlussdurchmesser realisiert werden.

Besonders vorteilhaft lässt sich eine solche Luftfeder zur Lagerung bzw. Federung eines Fahrersitzes in einem Fahrzeug oder einer Fahrerkabine in einem Fahrzeugrahmen verwenden, da hier oft die Einbauverhältnisse besonders eng sind.

Eine weitere vorteilhafte Anwendung einer solchen Luftfeder besteht in ihrem Einsatz als Aktuator in Fahrwerken landwirtschaftlicher Geräte oder Maschinen, hier insbesondere als Aktuator, der die Räder eines landwirtschaftlichen Fahrzeugs mehr oder weniger stark auf den Boden gedrückt. Ein Beispiel hierfür ist der Einsatz einer solchen Luftfeder in einer Saemaschine mit einer Vielzahl von Rädern, die im Sinne einer optimalen Lastverteilung durch an den Rädern bzw. im Fahrwerk angeordnete erfindungsgemäße Luftfedern als Aktuatoren in Bodenkontakt gehalten werden. In solchen Einsatzfällen ist nämlich der zur Verfügung stehende Bauraum ein genauso wichtiges Kriterium wie die nachträgliche einfache Zugänglichkeit solcher Elemente bei der Wartung und bei der Instandhaltung.

Anhand eines Ausführungsbeispiels soll die Erfindung näher erläutert werden. Es zeigen
- Fig. 1: Ein oberes Anschlussteil einer erfindungsgemäßen Luftfeder miz einem in einem Bajonettverschluss integrierten Luftanschluss,
- Fig. 2: eine weitere Ausführung eines Anschlussteils, bei der der Bajonettverschluss zwei Luftanschlüsse aufweist,
- Fig. 3: eine andere Ausführung eines Anschlussteils, bei dem in einem Bajonettverschluss zwei Luftanschlüsse vorhanden sind,
- Fig. 4: eine weitere Ausführung eines Anschlussteils bei dem zwei Luftanschlüsse unterschiedlicher Dimensionen in einem Bajonettverschluss angeordnet sind,
- Fig. 5 und 6: perspektivische Skizzen einer Ausführung aus dem Stand der Technik.

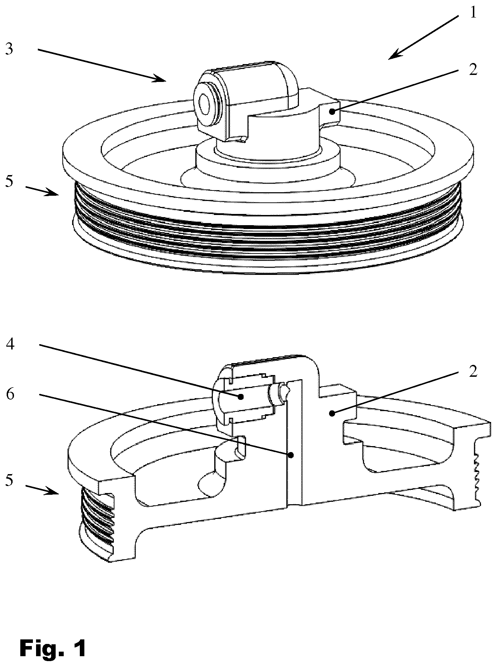

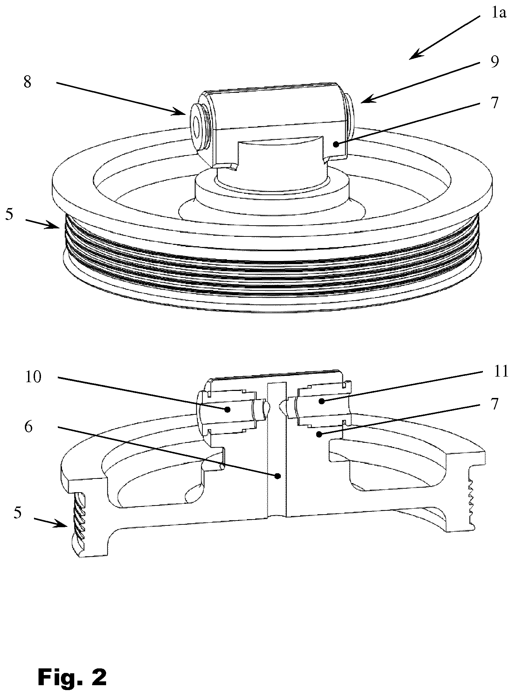

Fig. 1 zeigt ein oberes Anschlussteil 1, nämlich den Deckel/Luftfederdeckel einer Luftfeder für eine Sitzfederung. Im oberen Teil der Figur 1 ist eine perspektivische Ansicht dargestellt, während im unteren Teil der Fig. 1 dieselbe perspektivische Ansicht in einer Schnittdarstellung zu sehen ist. Gleiche Darstellungsarten finden sich ebenfalls in den Fig. 2, 3 und 4. Die Sitz-Luftfeder ist mit Hilfe dieses Anschlussteils 1 / Luftfederdeckels an eine hier nicht näher dargestellte gefederte Masse, nämlich einen Sitz angeschlossen.

Das Anschlussteil bzw. der Luftfederdeckel ist mit einer lösbaren Rastverbindung, hier einem Bajonettverschluss 2 an das zugehörige Befestigungsteil am Sitz angeschlossen. Dabei werden Anschlussteil/Luftfederdeckel 1 und Befestigungsteil einfach durch Ineinanderstecken und gegenseitiges Verdrehen verbunden. Der Bajonettverschluss 2 weist einen integrierten Luftanschluss 3 auf, an den eine hier nicht näher dargestellte Zuleitung für die Druckluftzufuhr der Luftfeder angeschlossen ist.

Der Luftanschluss 3 ist als Teil einer Steckkupplung ausgebildet, nämlich als Muffenende einer Steckkupplung und weist ein Luftanschlusselement 4 auf, welches als Steckpatrone im Bajonettverschluss 2 angeordnet ist, eine so genannte Schlauchsteckpatrone. Der komplementärere Teil, d.h. das Einsteckende befindet sich an einem hier nicht näher dargestellten Ende eines Schlauches für die Luftzuleitung.

Das Anschlussteil 1 weist einen profilierten Randbereich 5 auf, an den der in dieser Figur nicht dargestellte Luftfederbalg mithilfe von Spannringen befestigt wird. Das von den Anschlussteilen und dem Luftfederbalg umschlossene und unter Innendruck stehende Luftfedervolumen steht über die Kanalbohrung 6 im oberen Anschlussteil mit dem Luftanschluss in Verbindung.

Fig. 2 zeigt eine weitere Ausführung eines Anschlussteils 1a, bei der der Bajonettverschluss 7 zwei Luftanschlüsse 8 und 9 aufweist, die miteinander in Verbindung stehen und über die mehrere Luftfedern parallel angeschlossen werden können. Ansonsten ist die Bauweise ähnlich der in der Fig. 1 gezeigten Bauweise. Auch hier sind die Luftanschlüsse 8 und 9 als Muffenende einer Steckkupplung ausgebildet und weisen Luftanschlusselemente 10 und 11 auf, welches als Schlauchsteckpatronen im Bajonettverschluss 7 angeordnet sind.

Auch hier findet sich der profilierten Randbereich 5 zur Befestigung eines Luftfederbalgs mithilfe von Spannringen sowie eine Kanalbohrung 6 zur Verbindung des Arbeitsraumes mit dem Luftanschluss. Beide Luftanschlusselemente 10 und 11 sind ausgeführt als Schlauchsteckpatronen mit gleicher Dimension und Bauart.

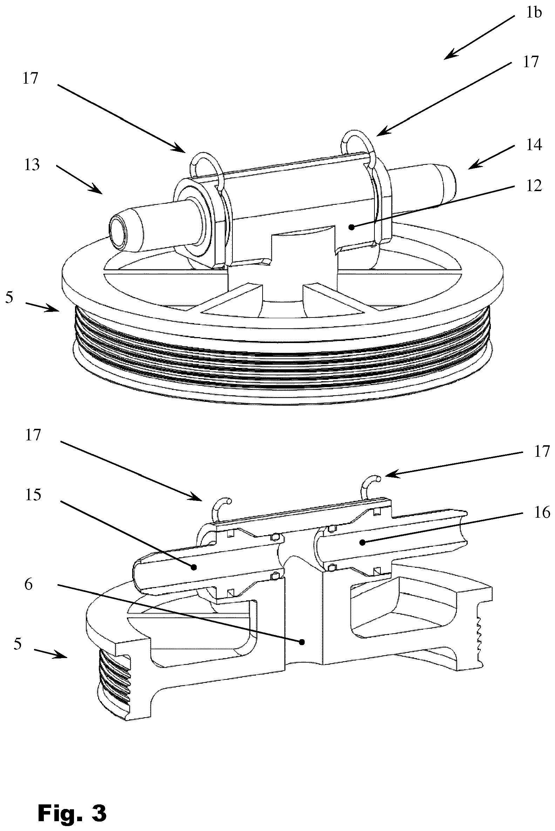

Figur 3 zeigt eine andere Ausführung eines Anschlussteils 1b, bei dem in einem Bajonettverschluss 12 zwei Luftanschlüsse 13 und 14 vorhanden sind, die ähnlich ausgeführt sind wie die in der Figur 2 dargestellten Luftanschlüsse. Die hier gezeigte als Steckkupplung ausgebildet Steckverbindung weist jedoch Luftanschlusselemente 15 und 16 auf, die mit Federclips 17, d.h. gebogenen Federdrähten als Befestigungsklammern fixiert werden.

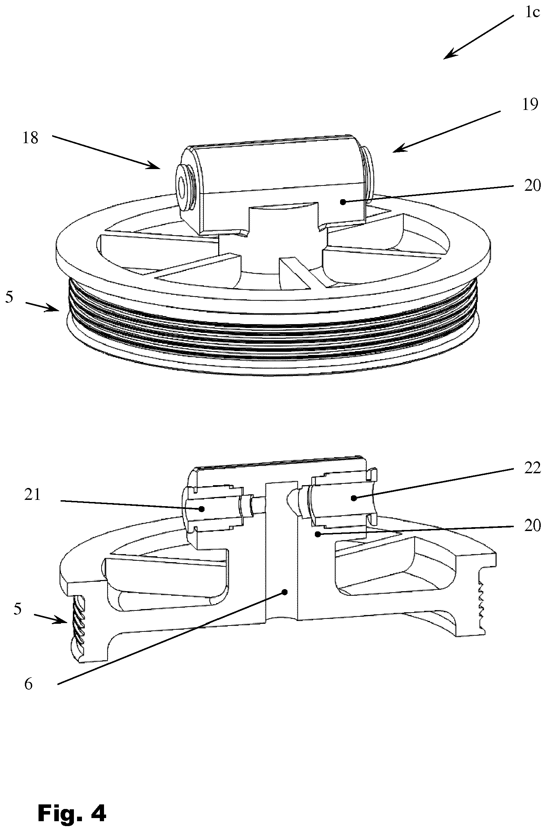

Figur 4 zeigt eine weitere Ausführung eines Anschlussteils 1c, bei dem ebenfalls zwei Luftanschlüsse 18 und 19 in einem Bajonettverschluss 20 angeordnet sind, ebenfalls ausgeführt als Schlauchsteckpatronen 21 und 22 gleicher Bauart, jedoch ausgebildet in unterschiedlichen Dimensionen.

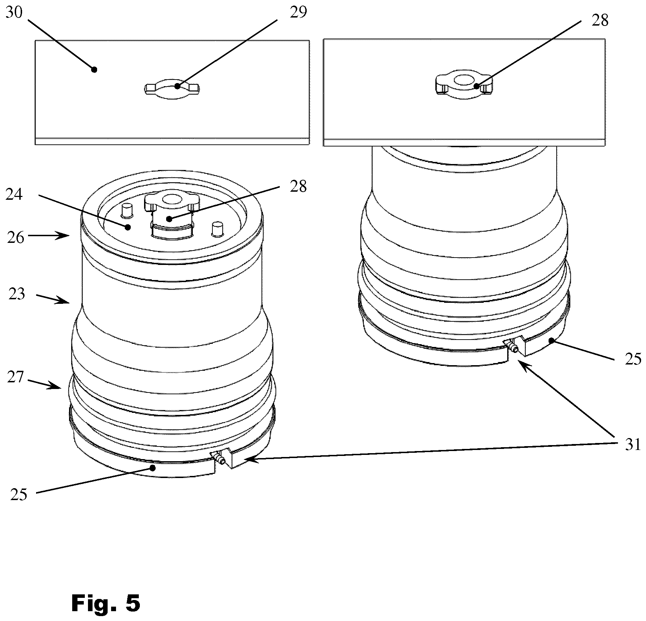

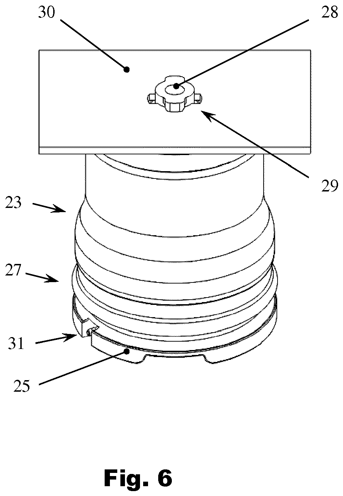

Figur 5 und 6 zeigen in der Zusammenschau eine Ausführung aus dem Stand der Technik, die noch einmal das Prinzip eines Anschlusses einer Luftfeder 23 zwischen hier nicht näher dargestellte gefederter und ungefederter Masse verdeutlicht. Links in der Figur 5 ist der Zustand vor der Montage dargestellt während rechts der Zustand nach Montage ersichtlich ist. Die Luftfeder 23 ist zwischen oberer Anschlussplatte/Luftfederdeckel 24 und Luftfederkolben 25 mithilfe von Spannringen 26 und 27 eingespannt. Man erkennt in der Fig. 5 deutlich den Bajonettverschluss mit dem Montagezapfen 28, der durch die Aussparung 29 des Befestigungsbleches 30 bzw. des Befestigungsteils am Sitz hindurch gesteckt wird, dann, wie in Fig. 6 gezeigt, um 90° gedreht und üblicherweise danach auf der Kolbenseite befestigt wird. Die Bajonettflügel des Montagezapfens liegen jetzt am Befestigungsblech an und es können auch Zugkräfte auf das Befestigungsblech übertragen werden. In solchen, im Stand der Technik bekannten Ausführungen, ist der Luftanschluss 31 üblicherweise am unteren Ende des Luftfederkolbens angebracht.

### Bezugszeichenliste

### (Teil der Beschreibung)

- 1, 1a, 1b, 1c: Anschlussteil
- 2: Bajonettverschluss
- 3: Luftanschluss
- 4: Luftanschlusselement
- 5: Profilierter Randbereich
- 6: Kanalbohrung
- 7: Bajonettverschluss
- 8: Luftanschluss
- 9: Luftanschluss
- 10: Luftanschlusselement
- 11: Luftanschlusselement
- 12: Bajonettverschluss
- 13: Luftanschluss
- 14: Luftanschluss
- 15: Luftanschlusselement
- 16: Luftanschlusselement
- 17: Federclip
- 18: Luftanschluss
- 19: Luftanschluss
- 20: Bajonettverschluss
- 21: Schlauchsteckpatrone
- 22: Schlauchsteckpatrone
- 23: Luftfeder
- 24: Luftfederdeckel (oberes Anschlussteil)
- 25: Luftfederkolben (unteres Anschlussteil)
- 26: Spannring
- 27: Spannring
- 28: Montagezapfen
- 29: Aussparung
- 30: Befestigungsblech
- 31: Luftanschluss

## Patentansprüche

1. Luftfeder mit einem Luftfederbalg aus elastomerem Material, der an den seinen Balgenden mit Hilfe von Anschlussteilen (1, 1a, 1b, 1c) zwischen gefederter und ungefederter Masse eingespannt und über die Anschlussteile an Befestigungsteilen der gefederten und ungefederten Masse anschließbar ist, wobei die Anschlussteile (1, 1a, 1b, 1c) und der Luftfederbalg den unter Innendruck stehenden und das Luftfedervolumen beinhaltenden Arbeitsraum umschließen und der Arbeitsraum mit mindestens einem in den Anschlussteilen vorgesehenen Luftanschluss (3, 8, 9, 13, 14, 18, 19) in Verbindung steht, **dadurch gekennzeichnet, dass** mindestens eines der Anschlussteile (1, 1a, 1b, 1c) mit einer als Bajonettverschluss (2) ausgebildeten Rastverbindung an das zugehörige Befestigungsteil anschließbar ist und Bajonettverschluss (2) mindestens einen Luftanschluss (3, 8, 9, 13, 14, 18, 19,) beinhaltet, an den eine Zuleitung oder ein Schlauch für die Druckluftzufuhr angeschlossen ist.

2. Luftfeder nach Anspruch 1, bei der der Bajonettverschluss mehrere Luftanschlüsse aufweist (8, 9, 13, 14, 18, 19,), vorzugsweise einen Luftanschluss zur Befüllung und Entlüftung des Arbeitsraumes und einen Luftanschluss zur Verbindung des Arbeitsraumes mit einem Zusatzvolumen oder weiteren Federvolumina.

3. Luftfeder nach einem der Ansprüche 1 oder 2, bei der der Luftanschluss (3, 8, 9, 13, 14, 18, 19,) als Steckverbindung oder Steckkupplung ausgebildet ist oder als Teil einer Steckverbindung oder Steckkupplung, deren komplementärer Teil sich an der Zuleitung oder am Schlauch befindet.

4. Luftfeder nach einem der Ansprüche 1 bis 3, bei der der Luftanschluss (3, 8, 9, 13, 14, 18, 19,) ein Luftanschlusselement (4, 10, 11, 15, 16, 21, 22) aufweist, welches als Buchse oder Steckpatrone in der Schnapp- oder Rastverbindung bzw. im Bajonettverschluss angeordnet ist.

5. Luftfeder nach einem der Ansprüche 1 bis 4, bei der der Bajonettverschluss mehrere unterschiedliche Luftanschlüsse (18, 19) bzw. Luftanschlusselemente (21, 22) aufweist, wobei die Luftanschlüsse bzw. Luftanschlusselemente unterschiedliche Dimensionen und/oder unterschiedliche Ausbildungen zur Verbindung mit Zuleitungen oder Schläuchen aufweisen.

6. Verwendung einer Luftfeder nach einem der Ansprüche 1 bis 6 zur Lagerung bzw. Federung eines Fahrersitzes in einem Fahrzeug **dadurch gekennzeichnet, dass** mindestens eines der Anschlussteile mittels der als Bajonettverschluss ausgebildeten Rastverbindung an das zugehörige Befestigungsteil angeschlossen ist.

7. Verwendung einer Luftfeder nach einem der Ansprüche 1 bis 6 zur Lagerung bzw. Federung einer Fahrerkabine in einem Fahrzeugrahmen **dadurch gekennzeichnet, dass** mindestens eines der Anschlussteile mittels der als Bajonettverschluss ausgebildeten Rastverbindung an das zugehörige Befestigungsteil angeschlossen ist.

8. Verwendung einer Luftfeder nach einem der Ansprüche 1 bis 6 als federnder Aktuator in Fahrwerken landwirtschaftlicher Geräte **dadurch gekennzeichnet, dass** mindestens eines der Anschlussteile mittels der als Bajonettverschluss ausgebildeten Rastverbindung an das zugehörige Befestigungsteil angeschlossen ist.

## Claims

1. Air spring comprising an air-spring lobe made of elastomer material, which is clamped at the lobe ends thereof by means of connection parts (1, 1a, 1b, 1c) between the sprung mass and the unsprung mass and can be connected by way of the connection parts to the fastening parts of the sprung and the unsprung mass, wherein the connection parts (1, 1a, 1b, 1c) and the air-spring lobe enclose the working chamber that is under internal pressure and contains the air-spring volume, and the working chamber is in connection with at least one air connection (3, 8, 9, 13, 14, 18, 19) provided in the connection parts, **characterized in that** at least one of the connection parts (1, 1a, 1b, 1c) can be connected to the associated fastening part by a latching connection formed as a bayonet closure (2) and bayonet closure (2) includes at least one air connection (3, 8, 9, 13, 14, 18, 19), to which a feed line or a hose for the compressed air supply is connected.

2. Air spring according to Claim 1, in which the bayonet closure has a number of air connections (8, 9, 13, 14, 18, 19), preferably an air connection for filling and venting the working chamber and an air connection for connecting the working chamber to an additional volume or further spring volumes.

3. Air spring according to one of Claims 1 and 2, in which the air connection (3, 8, 9, 13, 14, 18, 19) is formed as a plug-in connection or plug-in coupling or as part of a plug-in connection or plug-in coupling, the complementary part of which is located on the feed line or on the hose.

4. Air spring according to one of Claims 1 to 3, in which the air connection (3, 8, 9, 13, 14, 18, 19) has an air connection element (4, 10, 11, 15, 16, 21, 22) that is arranged as a bushing or plug-in cartridge in the snap-in or latching connection or in the bayonet closure.

5. Air spring according to one of Claims 1 to 4, in which the bayonet closure has a number of different air connections (18, 19) or air connection elements (21, 22), wherein the air connections or air connection elements have different dimensions and/or different embodiments for the connection to feed lines or hoses.

6. Use of an air spring according to one of Claims 1 to 6 for the mounting or spring mounting of a driver's seat in a vehicle, **characterized in that** at least one of the connection parts is connected to the associated fastening part by means of the latching connection formed as a bayonet closure.

7. Use of an air spring according to one of Claims 1 to 6 for the mounting or spring mounting of a driver's cab in a vehicle frame, **characterized in that** at least one of the connection parts is connected to the associated fastening part by means of the latching connection formed as a bayonet closure.

8. Use of an air spring according to one of Claims 1 to 6 as a sprung actuator in undercarriages of agricultural equipment, **characterized in that** at least one of the connection parts is connected to the associated fastening part by means of the latching connection formed as a bayonet closure.

## Revendications

1. Ressort pneumatique pourvu d'un soufflet en élastomère qui est encastré au niveau de ses extrémités, à l'aide d'éléments de raccordement (1, 1a, 1b, 1c), entre une masse montée sur ressort et une masse non montée sur ressort et qui peut être raccordé à des éléments de fixation de la masse montée sur ressort et de la masse non montée sur ressort par le biais des éléments de raccordement,
les éléments de raccordement (1, 1a, 1b, 1c) et le soufflet entourant l'espace de travail placé à une pression intérieure et enfermant le volume du ressort pneumatique, et l'espace de travail étant en liaison avec au moins un raccord d'air (3, 8, 9, 13, 14, 18, 19) prévu dans les éléments de raccordement, **caractérisé en ce que** l'un au moins des éléments de raccordement (1, 1a, 1b, 1c) peut être raccordé à l'élément de fixation associé par une liaison à encliquetage conçue comme une fermeture à baïonnette (2) et la fermeture à baïonnette (2) comporte au moins un raccord d'air (3, 8, 9, 13, 14, 18, 19,) auquel est raccordé(e) une conduite d'alimentation ou un tuyau d'alimentation en air comprimé.

2. Ressort pneumatique selon la revendication 1, la fermeture à baïonnette comportant une pluralité de raccords d'air (8, 9, 13, 14, 18, 19), de préférence un raccord d'air destiné au remplissage et à la purge de l'espace de travail et un raccord d'air destiné à relier l'espace de travail à un volume supplémentaire ou d'autres volumes de ressort.

3. Ressort pneumatique selon l'une des revendications 1 et 2, dans lequel le raccord d'air (3, 8, 9, 13, 14, 18, 19) est conçu comme une liaison par enfichage ou un accouplement par enfichage ou comme partie d'une liaison par enfichage ou d'un accouplement par enfichage dont la partie complémentaire se trouve au niveau de la conduite d'alimentation ou du tuyau.

4. Ressort pneumatique selon l'une des revendications 1 à 3, dans lequel le raccord d'air (3, 8, 9, 13, 14, 18, 19) est un élément (4, 10, 11, 15, 16, 21, 22) qui est disposé sous la forme d'une douille ou d'une cartouche enfichable dans la liaison par enclenchement ou par encliquetage ou dans la fermeture à baïonnette.

5. Ressort pneumatique selon l'une des revendications 1 à 4, dans lequel la fermeture à baïonnette comprend une pluralité de raccords d'air (18, 19) et d'éléments de raccord d'air (21, 22) différents, les raccords d'air ou les éléments de raccord d'air ayant des dimensions et/ou des conformations différentes pour la liaison à des conduites d'alimentation ou des tuyaux.

6. Utilisation d'un ressort pneumatique selon l'une des revendications 1 à 6 pour le montage sur palier ou sur ressort d'un siège de conducteur dans un véhicule, **caractérisée en ce que** l'un au moins des éléments de raccordement est raccordé à l'élément de fixation associé à l'aide de la liaison par encliquetage conçue comme une fermeture à baïonnette.

7. Utilisation d'un ressort pneumatique selon l'une des revendications 1 à 6 pour le montage sur palier ou sur ressort d'une cabine de conducteur dans un châssis de véhicule, **caractérisée en ce que** l'un au moins des éléments de raccordement est raccordé à l'élément de fixation associé à l'aide de la liaison par encliquetage conçue comme une fermeture à baïonnette.

8. Utilisation d'un ressort pneumatique selon l'une des revendications 1 à 6 comme actionneur à ressort dans un mécanisme de roulement d'appareils agricoles, **caractérisée en ce que** l'un au moins des éléments de raccordement est raccordé à l'élément de fixation associé à l'aide de la liaison par encliquetage conçue comme une fermeture à baïonnette.
